# EUROPÄISCHE PATENTANMELDUNG

(11) **EP 4 206 022 A1**
(43) Veröffentlichungstag der Anmeldung: **05.07.2023**
(21) Anmeldenummer: 22216786.8
(22) Anmeldetag: 27.12.2022
(51) Int. Cl.: B60L 9/14, B60L 9/30, B60L 53/50

(54) **SYSTEM UND VERFAHREN ZUR BEREITSTELLUNG VON ELEKTRISCHER ENERGIE FÜR SCHIENENFAHRZEUGE**

(30) Priorität: 28.12.2021 AT 510502021
(71) Anmelder: Plasser & Theurer Export Von Bahnbaumaschinen Gesellschaft m.b.H., 1010 Wien (AT)
(72) Erfinder: HASSLACHER, Alexander, 4060 Leonding (AT)

(57) **Zusammenfassung**

Die Erfindung betrifft ein System zur Energieversorgung von auf einem Gleis (2) verfahrbaren Schienenfahrzeugen, umfassend eine Versorgungseinheit (1) zur Erzeugung und/oder Umwandlung elektrischer Energie, insbesondere von Bahnstrom, weiters umfassend ein Schienenfahrzeug und eine Verbindungseinrichtung zur Übertragung der elektrischen Energie zwischen Versorgungseinheit (1) und Schienenfahrzeug. Dabei ist das Schienenfahrzeug als Gleisbaumaschine (3) ausgeführt, wobei die Schnittstelle an der Versorgungseinheit (1) zur Bereitstellung und Übergabe der elektrischen Energie an die zu versorgende Gleisbaumaschine (3) als Schnellkupplung (13) eingerichtet ist, wobei die Verbindungseinrichtung zwischen Schnellkupplung (13) und Gleisbaumaschine (3) als elektrischer Leiter in 2-poliger Form mit Hin- und Rückleiter (10) und/oder als Leiter in 1-poliger Form mit Rückleitung (8) über Laufwerke bzw. über Gleis (2) und Schiene (9) ausgebildet ist und wobei die Einspeisung der elektrischen Energie in die Gleisbaumaschine (3) mittels eines im Dachbereich der Gleisbaumaschine (3) eingerichteten Hauptschalters (18) installierbar ist. Damit wird die Flexibilität und Leistungsfähigkeit im internationalen Arbeitseinsatz erhöht.

## Beschreibung

### Technisches Gebiet

Die Erfindung betrifft ein System zur Energieversorgung von auf einem Gleis verfahrbaren Schienenfahrzeugen, umfassend eine Versorgungseinheit zur Erzeugung und/oder Umwandlung elektrischer Energie, insbesondere von Bahnstrom, weiters umfassend ein Schienenfahrzeug und eine Verbindungseinrichtung zur Übertragung der elektrischen Energie zwischen Versorgungseinheit und Schienenfahrzeug. Zudem betrifft die Erfindung ein Verfahren zum Betreiben des Systems.

### Stand der Technik

Bahnstrom für den Bahnbetrieb wird in unterschiedlichsten Spannungen, bei Wechselstrombahnen auch unterschiedlichsten Frequenzen, bereitgestellt. Diese Bandbreite ist einerseits historisch bedingt, andererseits auch von landestypischen Faktoren abhängig und zudem im Zuge der technischen Weiterentwicklung Veränderungen unterworfen. Wechselstromsysteme (AC) sind ähnlich weit verbreitet wie Gleichstrombahnen (DC), doch geht wegen ihrer Vorteile der Trend bei umfassenden Elektrifizierungen, neuen Netzen oder neuen Hochleistungsstrecken zu Wechselstrom.

In Deutschland, Österreich und der Schweiz ist der Eisenbahnbetrieb überwiegend auf den Betrieb mit Einphasen-Wechselstrom von 15 kV und 16 2/3 Hz zugeschnitten. Wobei die Frequenz inzwischen auf den Dezimalbruchwert von 16,7 Hz festgelegt wurde. In Europas landesweiten Eisenbahnnetzen sind vor allem vier Stromsysteme verbreitet, teilweise auch grenzüberschreitend wie beispielsweise im Raum Deutschland, Österreich, Schweiz oder in Südosteuropa. Andererseits gibt es in manchen Staaten zwei unterschiedliche Bahnstromsysteme bei den Vollbahnen (Frankreich, Spanien, Russland). Die vier häufigsten Stromsysteme der Vollbahnen in Europa sind Gleichstrom 1.500 V DC, Gleichstrom 3.000 V DC, Wechselstrom 15 kV AC 16,7 Hz und Wechselstrom 25 kV AC 50 Hz. Trotz kontinuierlicher Anschaffungen und der Verbreitung neuer Mehrsystem-Lokomotiven ist an Grenzbahnhöfen durch den Übergang zwischen unterschiedlichen Spannungssystemen in vielen Fällen nach wie vor ein Lokwechsel im Personen- und Güterverkehr erforderlich.

Selbstfahrende, wie auch nicht selbstfahrende Gleisbaumaschinen sind aufgrund ihrer Bauweise und den spezifischen Anwendungen im Arbeitseinsatz überwiegend mit Verbrennungsmotoren ausgerüstet. Durch den Einsatz von Dieselmotoren ist unabhängig vom Vorhandensein einer Oberleitung eine hohe Flexibilität im Einsatz gegeben. In den letzten Jahren führt jedoch ein anhaltendes Umdenken in Hinblick auf Umweltschonung durch Emissions- und Lärmreduktion, aber auch Einsparungspotential und Effizienz zu neuen Antriebskonzepten.

Es werden inzwischen je nach Arbeitseinsatz und Aufgabe hybride, aber auch rein elektrisch angetriebene Maschinen entwickelt und erfolgreich eingesetzt. Elektrisch betriebene Gleisbaumaschinen werden üblicherweise gemäß dem Einsatz im jeweiligen Land spezifiziert und nach dem dort vorliegenden Bahnstromnetz ausgelegt. Ein Maschineneinsatz in unterschiedlichen Bahnstromnetzen ist dabei aus auslegungstechnischen und wirtschaftlichen Gründen in der Regel nicht vorgesehen.

Maschinenhersteller mit einem Produktportfolio für den weltweiten Einsatz sind mit großen Herausforderungen für die Inverkehrbringung und Zulassung von Maschinen konfrontiert. Neben verschiedenen Spurweiten stellen dabei vor allem die oben erläuterten, weltweit unterschiedlichen Bahnstrom- und Oberleitungssysteme einen erheblichen Aufwand dar. Zudem sind auf vielen Neben- und Testgleisen keine Oberleitungen vorhanden. Inbetriebsetzungen, aber auch Abnahme-, Test-, Versuchs- und Zulassungsabläufe sind dadurch mit großem logistischem Aufwand und folglich hohen Personal- sowie Sachkosten verbunden.

Die DE 2325905 A1 offenbart einen mobilen, auf Schienen verfahrbaren Prüfstand für Gasturbinentriebwerke. Dabei treibt eine Gasturbine einen Generator zur Erzeugung von Bahnstrom an, der zur Energieversorgung einer serienmäßigen Lokomotive verwendet wird. Dadurch entsteht eine autarke Einheit, die als mobiler Turbinenprüfstand unter erschwerten Umgebungsbedingungen im Eisenbahnbetrieb Anwendung findet.

In der AT 521412 A1 wird ein Schienenfahrzeug beschrieben, dass mit einem an ein Schienenfahrwerk gekoppelten Energiewandler mechanische Energie in elektrische Energie umwandelt und auf diese Weise Arbeitsaggregate versorgt.

Weiters zeigt die US 2014012446 A1 ein System mit einem Steuermodul, das dazu konfiguriert ist, den Betrieb eines ersten Schützes und eines zweiten Schützes in einem Fahrzeugsystem zu steuern. Die ersten und zweiten Schütze sind konfiguriert, um Front-End- bzw. Gleichstrom/DC-Busse selektiv mit einem Energiespeichersystem des Fahrzeugsystems zu verbinden. Der Front-End-Bus ist so konfiguriert, dass er elektrische Energie von einer externen Energiequelle empfängt und die elektrische Energie einer Wandlervorrichtung bereitstellt. Das Steuermodul ist dazu konfiguriert, den zweiten Schütz zu schließen, wenn das Fahrzeugsystem operativ mit der externen Leistungsquelle gekoppelt ist, so dass das Energiespeichersystem durch die Gleichstromleistung geladen wird.

### Darstellung der Erfindung

Der Erfindung liegt die Aufgabe zugrunde, für ein System der eingangs genannten Art eine dahingehende Verbesserung gegenüber dem Stand der Technik anzugeben, um die Flexibilität und Leistungsfähigkeit im internationalen Arbeitseinsatz im Rahmen der länderspezifischen, sowie arbeitsspezifischen Anforderungen signifikant zu erhöhen. Zudem sind Arbeits- und Zulassungsvorhaben mit wesentlich geringerem Zeitaufwand effizient durchführbar. Weiters ist es Aufgabe der Erfindung, eine entsprechende Versorgungseinheit und ein Verfahren zum Betreiben des Systems anzugeben.

Erfindungsgemäß werden diese Aufgaben gelöst durch ein System mit den Merkmalen des unabhängigen Anspruchs 1, eine Versorgungseinheit gemäß des unabhängigen Anspruchs 3 und ein Verfahren gemäß des unabhängigen Anspruchs 12. Abhängige Ansprüche geben vorteilhafte Ausgestaltung der Erfindung an.

Die Erfindung sieht vor, dass das Schienenfahrzeug als Gleisbaumaschine mit Arbeitsaggregaten ausgeführt ist, dass die Schnittstelle an der Versorgungseinheit zur Bereitstellung und Übergabe der elektrischen Energie an die zu versorgende Gleisbaumaschine als Schnellkupplung eingerichtet ist, dass die Verbindungseinrichtung zwischen Schnellkupplung und Gleisbaumaschine als elektrischer Leiter in 2-poliger Form mit Hin- und Rückleiter und/oder als elektrischer Leiter in 1-poliger Form mit Rückleitung über Laufwerke bzw. über Gleis und Schiene ausgebildet ist und dass die Einspeisung der elektrischen Energie in die Gleisbaumaschine mittels eines im Dachbereich der Gleisbaumaschine eingerichteten Hauptschalters installierbar ist. Auf diese Weise ist eine geografisch lokale Simulation unterschiedlicher, länderspezifischer Oberleitungssysteme und damit eine Bereitstellung unterschiedlicher Bahnstromarten möglich. Mit diesem Bahnstrom sind elektrisch betriebene Gleisbaumaschinen, sowie damit verbundene Arbeitsprozesse mit elektrischer Energie versorgbar. Allgemeine Inbetriebsetzungen, aber auch Abnahme-, Test-, Versuchs- und Zulassungsabläufe zeichnen sich dadurch mit deutlich geringerem logistischen und personellen Aufwand bei hohen Sicherheitsstandards aus.

Weiters ist vorgesehen, dass an der Versorgungseinheit zur Bereitstellung und Übergabe der elektrischen Energie eine zusätzliche, zweite Schnittstelle eingerichtet ist, dass diese Schnittstelle eine höhenverstellbare, dreh-/schwenkbar gelagerte, elektrisch leitende Einrichtung umfasst, dass die elektrisch leitende Einrichtung überwiegend mit einer Längsausdehnung in Richtung der Mittelachse des Längsverlaufs des Gleises ausgebildet ist und dass diese zusätzliche Schnittstelle zur Einspeisung der elektrischen Energie in die Gleisbaumaschine mittels einer Abgreifeinrichtung der Gleisbaumaschine, insbesondere einem Stromabnehmer bzw. Pantographen, einrichtbar ist. Diese Einrichtung schwenkt ein Stück Metall, insbesondere ein verstärkt gelagertes Stück Oberleitung, hin und her um den Seil- bzw. Oberleitungsverlauf zu simulieren. Auf diese Weise sind elektrische Einstelltests und Prüfverfahren auf Gleisen ohne Oberleitung auch ohne Versorgungsleitungen und damit ohne Hin- und Rückleiter durchführbar.

Die erfindungsgemäße Versorgungseinheit zur Verwendung im System sieht vor, dass diese eine Abgreifeinrichtung zum Abgreifen von vorhandenem Bahnstrom an der Oberleitung, eine Wandlerschaltung zur Aufbereitung und/oder Umwandlung von Bahnstrom umfasst, dass für den Betrieb und die Überwachung der Versorgungseinheit eine Steuerungseinrichtung eingerichtet ist, dass die Bereitstellung von Bahnstrom mittels der Wandlerschaltung als Wechsel- oder Gleichgröße vorgesehen ist und dass die Wandlerschaltung für eine Erzeugung der jeweils benötigten Form des Bahnstroms, insbesondere charakterisiert durch Strom- bzw. Spannungskennwerte, insbesondere Amplitude, Maximalwert und Frequenz, gemäß in der Steuerungseinrichtung hinterlegten Vorgaben und/oder Einstellungen eingerichtet ist. Somit ist eine individuelle, an die jeweilige Arbeits- und Anforderungssituation angepasste Einstellbarkeit der Parameter gegeben. Durch die wahlweise Erzeugung elektrischer Energie als Wechsel- oder Gleichgröße können die Anforderungen des jeweils benötigten Bahnstroms der jeweils unterschiedlichen, länderspezifischen Stromnetze erfüllt werden.

Eine Ausprägung der Erfindung sieht vor, dass die Bereitstellung von Bahnstrom mittels der Wandlerschaltung in 1-poliger Form mit Rückleitung über eine Schiene des Gleises und/oder 2-poliger Form mit Hin- und Rückleiter ausgebildet ist. Dadurch sind nahezu alle Bauarten von Gleisbaumaschinen und deren unterschiedliche Konstruktionsmerkmale betreffend die elektrische Versorgung abgedeckt. Bei der 1-poligen Ausführung wird die elektrische Energie über die Oberleitung zugeführt, der Stromkreis ist durch die Rückleitung über eine Schiene geschlossen.

Auch ist es vorteilhaft, wenn der Wandlerschaltung vorgeordnet ein Generator sowie ein zugehöriger Generatorantrieb eingerichtet sind. Auf vielen Neben- und Testgleisen ist keine Oberleitung vorhanden. In solchen Fällen wird die erforderliche elektrische Energie durch den Generator bereitgestellt. Dieser wandelt mit hoher Effizienz mechanische Energie in elektrische Energie um.

In einer Ausgestaltung ist vorgesehen, dass der Generatorantrieb als Verbrennungsmotor eingerichtet ist und dass zum Betrieb des Verbrennungsmotors Dieselkraftstoff, Ottokraftstoff, oder Gas vorgesehen ist. Durch den Einsatz handelsüblicher Kraftstoffe ist im weltweiten Einsatz ein Betrieb des Verbrennungsmotors mit größtmöglicher Flexibilität gewährleistet.

Eine Variante der Erfindung sieht vor, dass zur Speisung der Wandlerschaltung wenigstens eine Brennstoffzelle eingerichtet ist.
Die Anwendung dieser Technologie ermöglicht eine besonders umweltschonende, saubere Umwandlung von chemischer Reaktionsenergie eines kontinuierlich zugeführten Brennstoffes in elektrische Energie.

Vorteilhaftes Detail der Versorgungseinheit ist, dass die Abgreifeinrichtung zum Abgreifen von vorhandenem Bahnstrom an der Oberleitung als Pantograph ausgeführt ist. Je nach ausgelegter Fahrgeschwindigkeit kommen unterschiedliche Pantographen zum Einsatz, so etwa Stangenstromabnehmer, Bügelstromabnehmer, oder auch Scherenstromabnehmer als Unterbauart der Bügelstromabnehmer. Bei höheren Fahrgeschwindigkeiten werden nach aktuellem Stand sogenannte Halbscheren- und Einholmstromabnehmer eingesetzt. Pantographen bieten eine wartungsarme, stabile und sichere Stromabnahme bei hoher Verlässlichkeit.

Zudem ist vorgesehen, dass zur Bereitstellung von Bahnstrom und Übergabe der elektrischen Energie an die zu versorgende Gleisbaumaschine elektrisch leitende Schnellkupplungen eingerichtet sind. Damit sind Arbeiten auf dem Maschinendach für das Bedienpersonal in der Regel nicht mehr erforderlich. Dadurch ist größtmögliche Arbeitssicherheit und Komfort im Einsatz gegeben.

In einer Weiterbildung ist die Versorgungseinheit als mobile, selbsttragende Stahlbaukonstruktion, insbesondere als Container ausgeführt und die Abgreifeinrichtung für Bahnstrom in diese Stahlbaukonstruktion integriert. Dies ermöglicht einen flexiblen Einsatz der Versorgungseinheit, sowie einen Transport mittels üblicher Güter- und Transportsysteme auf dem Straßen-, Schienen- oder Wasserweg. In der Ausführung als Container ist eine kompakte Einheit mit geschützter Anordnung der Komponenten gegen äußere Einwirkungen und Beschädigung gegeben. Die selbsttragende Stahlbaukonstruktion sorgt im Transportfall für ein ordnungsgemäßes Anschlagen von Hebezeug und Zurrmittel.

Es ist vorgesehen, dass an der Versorgungseinheit eine höhenverstellbare, dreh-/schwenkbar gelagerte, elektrisch leitende Einrichtung angebracht ist und dass diese für eine Versorgung der Gleisbaumaschine mit elektrischer Energie eingerichtet ist. Damit ist die Durchführung von elektrischen Einstelltests und Prüfverfahren auf Gleisen ohne Oberleitung auch ohne elektrische Versorgungsleitungen und damit ohne Hin- und Rückleiter durchführbar.

Beim erfindungsgemäßen Verfahren zum Betreiben eines Systems ist vorgesehen, dass mit Beginn eines Arbeits- bzw. Versorgungseinsatzes sämtliche Komponenten der Versorgungseinheit durch die Steuerungseinrichtung gemäß den jeweiligen Einstellungen aktiviert werden, dass bei Vorhandensein von Bahnstrom über die Oberleitung dieser mittels Abgreifeinrichtung abgegriffen und an die Wandlerschaltung übergeben wird, dass die Wandlerschaltung Bahnstrom in der jeweils benötigten, gewünschten Form zur Versorgung der Gleisbaumaschine bereitstellt, insbesondere charakterisiert durch Strom- bzw. Spannungskennwerte, insbesondere Amplitude, Maximalwert und Frequenz, dass die Versorgungseinheit bei Nichtvorhandensein von Bahnstrom über die Oberleitung mittels Generatorantrieb den nachgeschalteten Generator antreibt und dadurch mit der erzeugten elektrischen Energie die Wandlerschaltung speist und dass die Wandlerschaltung Bahnstrom in der jeweils benötigten, gewünschten Form zur Versorgung der Gleisbaumaschine bereitstellt. Auf diese Weise ist ein kontrollierter und sicherer Ablauf der Test-/Versuchs-/Simulationsvorgänge im jeweiligen Land bei den jeweils unterschiedlich vorherrschenden Anforderungen an den Bahnstrom gegeben. Damit ist eine konstante, kontinuierliche, an die jeweilige Arbeits- und Einsatzsituation angepasste Versorgung mit Bahnstrom gegeben.

### Kurze Beschreibung der Zeichnungen

Die Erfindung wird nachfolgend in beispielhafter Weise unter Bezugnahme auf die beigefügten Figuren erläutert. Es zeigen in schematischer Darstellung:
- Fig. 1: Blockschaltbild der Versorgungseinheit
- Fig. 2: Seitenansicht Versorgungseinheit Variante Container
- Fig. 3: Seitenansicht Versorgungseinheit Variante Converterlok/Hybrid
- Fig. 4: Seitenansicht Variante Container mit Lokomotive
- Fig. 5: Seitenans. Var. Container mit versorgtem Schienenfahrzeug
- Fig. 6: Seitenans. Var. Flachcontainer mit versorgtem Schienenfahrzeug

### Beschreibung der Ausführungsformen

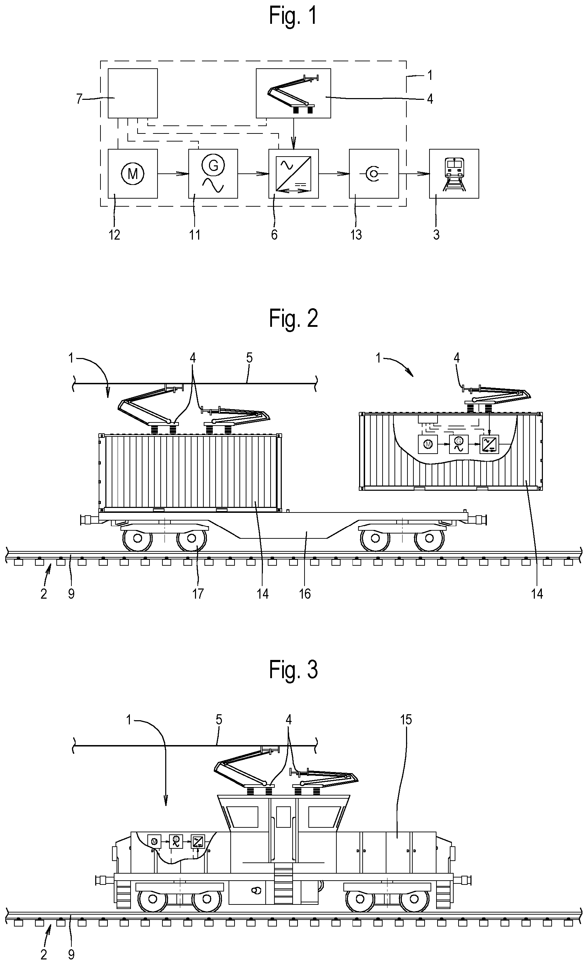

In Fig. 1 beschreibt ein Blockschaltbild den Systemaufbau und das Zusammenwirken der Systemkomponenten einer Versorgungseinheit 1. Zur Überwachung und Steuerung umfasst eine Steuerungseinrichtung 7 Steuerungs-/Datenleitungen zur Anbindung an eine Abgreifeinrichtung 4, an eine Wandlerschaltung 6, an einen Generator 11 und an einen Generatorantrieb 12. Bei Vorhandensein einer Oberleitung 5 wird Bahnstrom mittels Abgreifeinrichtung 4 aufgenommen. Die Abgreifeinrichtung 4 übergibt diesen Bahnstrom zur weiteren Aufbereitung an die Wandlerschaltung 6. Ist keine Oberleitung 5 vorhanden, so wird der Generator 11 vom zugehörigen Generatorantrieb 12 angetrieben. Der Generator 11 speist dann wiederum die Wandlerschaltung 6. Am Ausgang der Wandlerschaltung 6 ist zur sicheren Übergabe der elektrischen Energie eine Schnellkupplung 13 eingerichtet. Ein zu versorgendes Schienenfahrzeug bzw. eine Gleisbaumaschine 3 wird über die Schnellkupplung 13 mit elektrischer Energie versorgt.

Die Wandlerschaltung 6 umfasst Leistungselektronik, die als Gleich- und/oder Wechselrichter nach aktuellem Stand der Technik ausgeführt ist. Damit kann der benötigte Bahnstrom entsprechend der gewünschten Netz- bzw. Stromart erzeugt bzw. gewandelt werden. Je nach Quelle wird mittels Gleichrichter Gleichstrom (DC) und mittels Wechselrichter Wechselstrom (AC) bereitgestellt. Im Blockschaltbild der Fig. 1 ist die Wandlerschaltung 6 als umschaltbarer Gleich-/Wechselrichter dargestellt. Entsprechende Zusatzeinrichtungen umfassen beispielsweise Kondensatoren und/oder Drosseln zur Glättung elektrischer Größen.

Die Steuerungseinrichtung 7 zeichnet je nach Ausführungsform durch eine Computer-/ Recheneinheit, eine Anzeigeeinrichtung, sowie eine Bedien- und Eingabe-Einrichtung aus. Je nach Wunsch des Maschinenbetreibers ist eine Touch-Screen-Eingabefunktion möglich. Die Kommunikation zwischen der Versorgungseinheit 1 und dem Bedienpersonal erfolgt kabellos mittels eines mobilen Funknetzes über eine geschützte Netzwerkanbindung, insbesondere VPN, und/oder über eine kabelgebundene Netzwerkanbindung. In einer anderen Ausführungsvariante ist der Wegfall von Anzeige- und Eingabeeinrichtungen vorgesehen, die Bedienung erfolgt in diesem Fall ausschließlich von einem Bedienplatz an einem beliebigen Ort über eine kabellose oder kabelgebundene Netzwerkanbindung.

Fig. 2 zeigt die Seitenansicht einer Versorgungseinheit 1 in einer Ausführungsvariante als Container 14 mit zwei Abgreifeinrichtungen 4. Eine der beiden Abgreifeinrichtungen 4 ist ausgefahren und an die Oberleitung 5 angedrückt. Je nach Fahrtrichtung und Arbeitseinsatz können eine, oder auch beide Abgreifeinrichtungen 4 parallel ausgefahren und aktiv sein. Der Container 14 wird auf einem Containerwagen 16 über Laufwerke 17 auf einem Gleis 2 verfahren. Eine weitere Versorgungseinheit 1 in einem Container 14 ist rechts in schwebendem Zustand beim Ein-/Ausheben dargestellt. Diese ist mit einer Abgreifeinrichtung 4 ausgestattet. Der skizzierte Ausbruch zeigt schematisch Komponenten des inneren Aufbaus in Anlehnung an das Blockschaltbild in Fig. 1. Die Abgreifeinrichtungen 4 sind für einen sicheren Transport auf dem Land- oder Seeweg im Dach des Containers 14 versenkbar oder zur Gänze demontierbar und im Container 14 verstaubar.

In Fig. 3 ist die Seitenansicht einer Lokomotive 15 mit integrierter Versorgungseinheit 1 dargestellt. Die selbstfahrende Lokomotive 15 wird in ihrer Funktion auch als "Converterlok" oder "Hybridlok" bezeichnet. Auf dem Dach der Lokomotive 15 sind zwei Abgreifeinrichtungen 4 angebracht, wobei diese jeweils in eine der beiden Fahrtrichtungen ausgerichtet sind. Der skizzierte Ausbruch zeigt wie auch in Fig. 2 schematisch Komponenten des inneren Aufbaus in Anlehnung an das Blockschaltbild in Fig. 1.

Die Bezeichnung "Hybridlok" bzw. "Hybridlokomotive" der Lokomotive 15 rührt daher, dass der Fahrantrieb der selbigen durch Betrieb des Generators 11 über den Generatorantrieb 12 bei Zuführung von Kraftstoff erfolgen kann, ein Fahrantrieb aber auch ohne Betrieb des Generators 11 durch direkte Stromabnahme mittels Abgreifeinrichtung 4 an der Oberleitung 5 und Speisung der Fahrantriebe der Lokomotive 15 erfolgen kann.

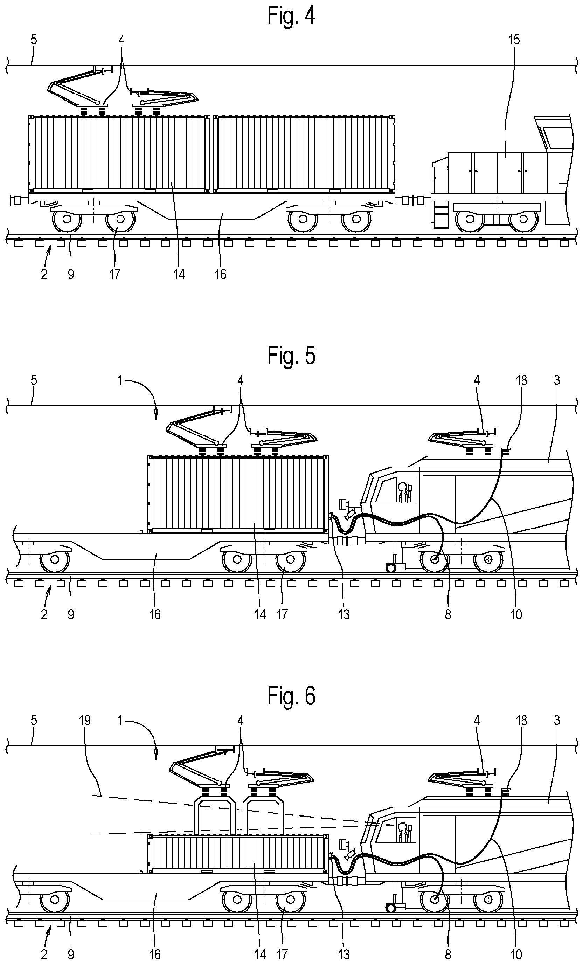

Ergänzend zeigt Fig. 4 nochmals eine Seitenansicht des Containers 14 auf Containerwagen 16 im Verschubverband mit der Lokomotive 15. Auf dem Containerwagen 16 ist bei entsprechender Größe/Längenausführung auch ein weiterer Container für Werkzeug, oder andere Arbeitsgeräte und Ausrüstung transportierbar und flexibel einsetzbar.

Fig. 5 stellt eine Seitenansicht des Containers 14 mit einer zu versorgenden Gleisbaumaschine 3 dar. Über eine elektrisch leitende Schnellkupplung 13 wird die Gleisbaumaschine 3 von der Versorgungseinheit 1 mit elektrischer Energie versorgt. Die Leitung zur Versorgung der Gleisbaumaschine 3 ist als Hin- und Rückleiter 10 eingerichtet. Dieser Hin- und Rückleiter 10 kann 1-polig oder 2-polig ausgeführt sein. Im üblichen Falle einer erforderlichen Rückleitung 8 ist zum Schließen des elektrischen Stromkreises über das Fahrwerk der Gleisbaumaschine 3 auf die Schiene 9 der Hin- und Rückleiter 10 1-polig ausgeführt.

Durch die Schnellkupplung 13 sind im Arbeitsablauf vor und nach der Versorgung mit Bahnstrom, sowie beim Wechsel der Fahrtrichtung für das Bedienpersonal keine gefährlichen Arbeiten auf dem Maschinendach erforderlich. Eine Einspeisung des Bahnstroms am Hauptschalter 18 der Gleisbaumaschine 3 ist einmalig als verschraubtes Kabel installierbar. Zudem können Abgreifeinrichtungen 4 bzw. Stromabnehmer bzw. Pantographen länderspezifisch auch mehrpolig ausgeführt sein.

Die Überwachung und Steuerung des gesamten Betriebs der Versorgungseinheit 1 im Arbeitseinsatz erfolgt vollautomatisiert durch die Steuerungseinrichtung 7 gemäß den durch Betreiber bzw. Bedienpersonal eingestellten Vorgaben. Zudem ist umschaltbar ein teilautomatisierter oder manueller Betrieb der Versorgungseinheit 7 vorgesehen.

Fig. 6 zeigt in einer Seitenansicht eine Variante des Containers 14 als Flachcontainer mit der zu versorgenden Gleisbaumaschine 3. Dabei ist der Container 14 in halber Bauhöhe ausgeführt, die Abgreifeinrichtungen 4 sind auf einer stabilen Tragkonstruktion aus Profilen gelagert. Diese Konstruktion ermöglicht ein freies Sichtfeld 19 des Bedienpersonals bzw. Maschinenführers der Gleisbaumaschine 3 zwischen Abgreifeinrichtung 4 und Container 14 hindurch. Auf diese Weise ist ein sicherer und komfortabler Betrieb des gesamten Maschinenverbandes aus Gleisbaumaschine 3 und Containerwagen 16 auf dem Gleis 2 in beide Richtungen möglich.

## Patentansprüche

1. System zur Energieversorgung von auf einem Gleis (2) verfahrbaren Schienenfahrzeugen, umfassend eine Versorgungseinheit (1) zur Erzeugung und/oder Umwandlung elektrischer Energie, insbesondere von Bahnstrom, weiters umfassend ein Schienenfahrzeug und eine Verbindungseinrichtung zur Übertragung der elektrischen Energie zwischen Versorgungseinheit (1) und Schienenfahrzeug, **dadurch gekennzeichnet, dass** das Schienenfahrzeug als Gleisbaumaschine (3) mit Arbeitsaggregaten ausgeführt ist, dass die Schnittstelle an der Versorgungseinheit (1) zur Bereitstellung und Übergabe der elektrischen Energie an die zu versorgende Gleisbaumaschine (3) als Schnellkupplung (13) eingerichtet ist, dass die Verbindungseinrichtung zwischen Schnellkupplung (13) und Gleisbaumaschine (3) als elektrischer Leiter in 2-poliger Form mit Hin- und Rückleiter (10) und/oder als elektrischer Leiter in 1-poliger Form mit Rückleitung (8) über Laufwerke bzw. über Gleis (2) und Schiene (9) ausgebildet ist und dass die Einspeisung der elektrischen Energie in die Gleisbaumaschine (3) mittels eines im Dachbereich der Gleisbaumaschine (3) eingerichteten Hauptschalters (18) installierbar ist.

2. System nach Anspruch 1, **dadurch gekennzeichnet, dass** an der Versorgungseinheit (1) zur Bereitstellung und Übergabe der elektrischen Energie eine zusätzliche, zweite Schnittstelle eingerichtet ist, dass diese Schnittstelle eine höhenverstellbare, dreh-/schwenkbar gelagerte, elektrisch leitende Einrichtung umfasst, dass die elektrisch leitende Einrichtung überwiegend mit einer Längsausdehnung in Richtung der Mittelachse des Längsverlaufs des Gleises (2) ausgebildet ist und dass diese zusätzliche Schnittstelle zur Einspeisung der elektrischen Energie in die Gleisbaumaschine (3) mittels einer Abgreifeinrichtung (4) der Gleisbaumaschine (3), insbesondere einem Stromabnehmer bzw. Pantographen, einrichtbar ist.

3. Versorgungseinheit (1) zur Verwendung in einem System nach einem der Ansprüche 1 oder 2, **dadurch gekennzeichnet, dass** die Versorgungseinheit (1) eine Abgreifeinrichtung (4) zum Abgreifen von vorhandenem Bahnstrom an der Oberleitung (5), eine Wandlerschaltung (6) zur Aufbereitung und/oder Umwandlung von Bahnstrom umfasst, dass für den Betrieb und die Überwachung der Versorgungseinheit (1) eine Steuerungseinrichtung (7) eingerichtet ist, dass die Bereitstellung von Bahnstrom mittels der Wandlerschaltung (6) als Wechsel- oder Gleichgröße vorgesehen ist und dass die Wandlerschaltung (6) für eine Erzeugung der jeweils benötigten Form des Bahnstroms, insbesondere charakterisiert durch Strom- bzw. Spannungskennwerte, insbesondere Amplitude, Maximalwert und Frequenz, gemäß in der Steuerungseinrichtung (7) hinterlegten Vorgaben und/oder Einstellungen eingerichtet ist.

4. Versorgungseinheit (1) nach Anspruch 3, **dadurch gekennzeichnet, dass** die Bereitstellung von Bahnstrom mittels der Wandlerschaltung (6) in 1-poliger Form mit Rückleitung (8) über eine Schiene (9) des Gleises (2) und/oder 2-poliger Form mit Hin- und Rückleiter (10) ausgebildet ist.

5. Versorgungseinheit (1) nach einem der Ansprüche 3 oder 4, **dadurch gekennzeichnet, dass** der Wandlerschaltung (6) vorgeordnet ein Generator (11) sowie ein zugehöriger Generatorantrieb (12) eingerichtet sind.

6. Versorgungseinheit (1) nach Anspruch 5, **dadurch gekennzeichnet, dass** der Generatorantrieb (12) als Verbrennungsmotor eingerichtet ist und dass zum Betrieb des Verbrennungsmotors Dieselkraftstoff, Ottokraftstoff, oder Gas vorgesehen ist.

7. Versorgungseinheit (1) nach einem der Ansprüche 3 bis 6, **dadurch gekennzeichnet, dass** zur Speisung der Wandlerschaltung (6) wenigstens eine Brennstoffzelle eingerichtet ist.

8. Versorgungseinheit (1) nach einem der Ansprüche 3 bis 7, **dadurch gekennzeichnet, dass** die Abgreifeinrichtung (4) zum Abgreifen von vorhandenem Bahnstrom an der Oberleitung (5) als Pantograph ausgeführt ist.

9. Versorgungseinheit (1) nach einem der Ansprüche 3 bis 8, **dadurch gekennzeichnet, dass** zur Bereitstellung von Bahnstrom und Übergabe der elektrischen Energie an die zu versorgende Gleisbaumaschine (3) elektrisch leitende Schnellkupplungen (13) eingerichtet sind.

10. Versorgungseinheit (1) nach einem der Ansprüche 3 bis 9, **dadurch gekennzeichnet, dass** die Versorgungseinheit (1) als mobile, selbsttragende Stahlbaukonstruktion, insbesondere als Container (14), ausgeführt ist und dass die Abgreifeinrichtung (4) für Bahnstrom in diese Stahlbaukonstruktion integriert ist.

11. Versorgungseinheit (1) nach einem der Ansprüche 3 bis 10, **dadurch gekennzeichnet, dass** an der Versorgungseinheit (1) eine höhenverstellbare, dreh-/schwenkbar gelagerte, elektrisch leitende Einrichtung angebracht ist und dass diese für eine Versorgung der Gleisbaumaschine (3) mit elektrischer Energie eingerichtet ist.

12. Verfahren zur Energieversorgung von auf einem Gleis (2) verfahrbaren Gleisbaumaschinen (3) mittels eines Systems nach einem der Ansprüche 1 oder 2, **dadurch gekennzeichnet, dass** mit Beginn eines Arbeits- bzw. Versorgungseinsatzes sämtliche Komponenten der Versorgungseinheit (1) durch die Steuerungseinrichtung (7) gemäß den jeweiligen Einstellungen aktiviert werden, dass bei Vorhandensein von Bahnstrom über die Oberleitung (5) dieser mittels Abgreifeinrichtung (4) abgegriffen und an die Wandlerschaltung (6) übergeben wird, dass die Wandlerschaltung (6) Bahnstrom in der jeweils benötigten, gewünschten Form zur Versorgung der Gleisbaumaschine (3) bereitstellt, insbesondere charakterisiert durch Strom- bzw. Spannungskennwerte, insbesondere Amplitude, Maximalwert und Frequenz, dass die Versorgungseinheit (1) bei Nichtvorhandensein von Bahnstrom über die Oberleitung (5) mittels Generatorantrieb (12) den nachgeschalteten Generator (11) antreibt und dadurch mit der erzeugten elektrischen Energie die Wandlerschaltung (6) speist und dass die Wandlerschaltung (6) Bahnstrom in der jeweils benötigten, gewünschten Form zur Versorgung der Gleisbaumaschine (3) bereitstellt.
